# EUROPEAN PATENT SPECIFICATION

(11) **EP 3 439 920 B1**
(45) Date of publication and mention of the grant of the patent: **11.03.2020**
(21) Application number: 17705901.1
(22) Date of filing: 20.02.2017
(51) Int. Cl.: B60R 1/00, G06K 9/00, H04N 5/232, G06K 9/46

(54) **DETERMINING MOUNTING POSITIONS AND/OR ORIENTATIONS OF MULTIPLE CAMERAS OF A CAMERA SYSTEM OF A VEHICLE**
BESTIMMUNG DER MONTAGEPOSITIONEN UND/ODER AUSRICHTUNGEN MEHRERER KAMERAS EINES KAMERASYSTEMS EINES FAHRZEUGS
DÉTERMINATION D'ORIENTATIONS ET/OU DE POSITIONS DE MONTAGE DE PLUSIEURS CAMÉRAS D'UN SYSTÈME DE CAMÉRA DE VÉHICULE

(30) Priority: 05.04.2016 GB 201605781
(43) Date of publication of application: 13.02.2019
(73) Proprietor: Continental Automotive GmbH, 30165 Hannover (DE)
(72) Inventor: SAWARD, Ian, Lewes Sussex BN7 1BH (GB)
(74) Representative: Metzger, Eva
(86) International application number: PCT/EP2017/053766
(87) International publication number: WO 2017/174250

(56) References cited:
- EP-A1- 2 530 647
- EP-A1- 2 692 584
- EP-A1- 2 816 503
- WO-A1-2012/145822
- DE-A1-102013 224 502
- JP-A- 2008 284 989
- KR-A- 20150 005 012
- KR-A- 20150 019 191
- US-A1- 2014 247 352
- US-A1- 2014 247 354
- US-A1- 2015 254 853

## Description

The present application relates to a method for determining mounting positions and/or orientations of multiple cameras of a camera system of a vehicle.

Increasingly, passenger vehicle are equipped with cameras. The cameras can provide many assistance functions to the driver, such as lane keeping, parking aid, detection of obstacles and other objects, emergency braking, reconstruction of accidents and other events, monitoring of the traffic and weather situation, recording of driving patterns, deriving speed and position of the car, vehicle detection and collision avoidance, detection of traffic signs, lighting adjustment, night vision. These functions require image processing, which can be provided by processing units in the cameras.

In case of multiple-camera systems, such as mirror replacement systems or surround view systems, the multiple cameras have different mounting positions and/or different orientations and are usually connected to a dedicated image-processing unit in the car, also called central electronic control unit (ECU). The processing unit may be connected to further devices, such as screens, indicators, the engine control unit or other driver assistance systems.

More specifically, a surround view system for a vehicle comprises a plurality of cameras for capturing a surround view of the environment of the vehicle for display to a driver. Typically, a surround view system comprises four cameras, in particular a front camera, a rear camera, a left side camera and a right side camera. Usually, a surround view systems further comprises an ECU with image processing means for processing the images captured and provided by the plurality of cameras, as well as image displaying means for displaying the surround view to the driver.

A surround view is a composite view composed from the images captured by the cameras. The images from each of the cameras are combined to provide a surround view such as a 360° image in the form of a top view, also denoted as a bird's eye view, or a panoramic view. The images from adjacent cameras, for example a front camera and a side camera, may overlap with one another in order to provide an uninterrupted 360° surround view.

US 2014/0247352 discloses such a multi-camera surround view system, which generates a stitched virtual top view image.

As another multiple-camera system, a mirror replacement system for a vehicle also comprises multiple cameras for capturing a view of the vehicles environment, in particular a rearward view of the left and right environment of the vehicle. Usually, a mirror replacement system also comprises an ECU with image processing means for processing the images captured and provided by the plurality of cameras, as well as image displaying means for displaying the rearward views to the driver.

EP 2 692 584 discloses such a mirror replacement system.

US2014/0247354 A1 discloses a calibration system and method for a multi-camera vision system.

In case of a multiple-camera system, where each of the cameras is placed at a different specified position of the vehicle and/or with a different orientation, i.e. a different viewing direction in relation to the vehicle, and where each of the cameras is connected to a common central ECU, the problem arises, that the ECU needs to know which image signal is received from which of the cameras.

In current solutions, where the cameras are connected with the ECU via cables, different connectors or different mechanical coding of the connectors are used such that the wiring from the cameras cannot be connected to the incorrect camera port of the ECU.

Such solutions add costs to manufacturing of camera ports and cable harness.

Hence, it is an object of the invention to provide a solution for the above-mentioned problem.

For this purpose, the present invention provides a method for determining mounting positions and/or orientations of multiple cameras of a vehicular camera system according to claim 1. Further, the present invention provides a camera system according to claim 3 and image processing means according to claim 6.

The present invention relates to a method for determining mounting positions and/or orientations, also denoted as viewing directions, of multiple cameras of a multiple-camera system of a vehicle. The multiple-camera system can be for example a surround view camera system or a mirror replacement system.

It should be noted, that the determination of the position and orientation, according to the invention, has to be distinguished from the so called extrinsic camera calibration. During the extrinsic camera calibration the alignment of each camera is determined, usually with respect to a vehicle-related coordinate system. However, the extrinsic camera calibration is only possible if it is already known, which camera is which, i.e. if the position of the cameras and consequently the orientation associated therewith is known.

In principle, the method can be used for any multiple-camera system of a vehicle, where the cameras are arranged at different mounting positions and/or with different orientations, in particular at several specified mounting positions and/or with several specified orientations, and where it has to be determined which camera has which of these mounting positions and/or orientations. In other words, a method is provided for determining which camera of a multiple-camera has which position and/or orientation of a certain number of specified positions and orientations for the cameras of that multiple-camera system.

According to the invention, images are captured by the cameras and the mounting positions and/or orientations of the cameras are determined by means of image processing of the captured images.

Preferably, the cameras are connected to the same ECU, in particular via cable connections, and in particular to an ECU having identical connectors ports for each camera, such that each camera can be connected to each connector port. The image processing for determining the mounting positions and/or orientations of the cameras is preferable executed by the ECU, e.g. by image processing means of the ECU.

According to a first preferred embodiment of the invention, the images are captured during a movement of the vehicle and the mounting positions and/or orientations are determined by evaluating an optical flow within the captured images.

According to a further preferred embodiment, the mounting positions are determined by detecting specific markers within the captured images.

According to another preferred embodiment of the invention, the mounting positions and/or orientations are determined by detecting known reference features of the vehicle within the captured images.

According to a another preferred embodiment of the invention, the mounting positions and/or orientations are determined by evaluating overlapping regions of the fields of view of the cameras, in particular by matching corresponding image regions.

The above identified aspects and embodiments may be combined with each other where possible. Further embodiments and implementations of the present invention may also comprise combinations of embodiments and features of the present invention.

The present invention further relates to a camera system for a vehicle comprising multiple cameras having different mounting positions and/or orientations, and comprising image processing means adapted to determine the respective mounting positions and/or orientations of the cameras according to one of the previously mentioned embodiments. The present invention also relates to a vehicle comprising such a camera system.

Preferably, the camera system is a surround view system comprising four or more cameras having four or more different specified mounting positions and orientations, preferably a front, rear, left side and right side mounting position and orientation.

The camera system may also be a mirror replacement system comprising two cameras having two different specified mounting positions, namely a left side and right side mounting position.

The present invention further relates to image processing means for a multiple-camera system and for determining mounting positions and/or orientations of the cameras of the camera system. In particular, the image processing means are a part of an ECU of such a camera system, whereby the image processing means comprise a computer program product with computer executable code stored thereon which, when executed by the image processing means, executes the method according to the invention.

The present invention will be described in the following by embodiments based on the accompanying drawings, wherein:
- Figure 1: illustrates a first embodiment of the invention on the example of a surround view camera system,
- Figure 2: illustrates a second embodiment of the invention on the example of a surround view camera system,
- Figure 3: illustrates a third embodiment of the invention on the example of a surround view camera system,
- Figure 4: illustrates a fourth embodiment of the invention on the example of a surround view camera system,
- Figure 5: illustrates the third embodiment of the invention on the example of a mirror replacement system.

In the following description, details are provided to describe the embodiments of the present specification. It shall be apparent to one skilled in the art, however, that the embodiments may be practised without such details.

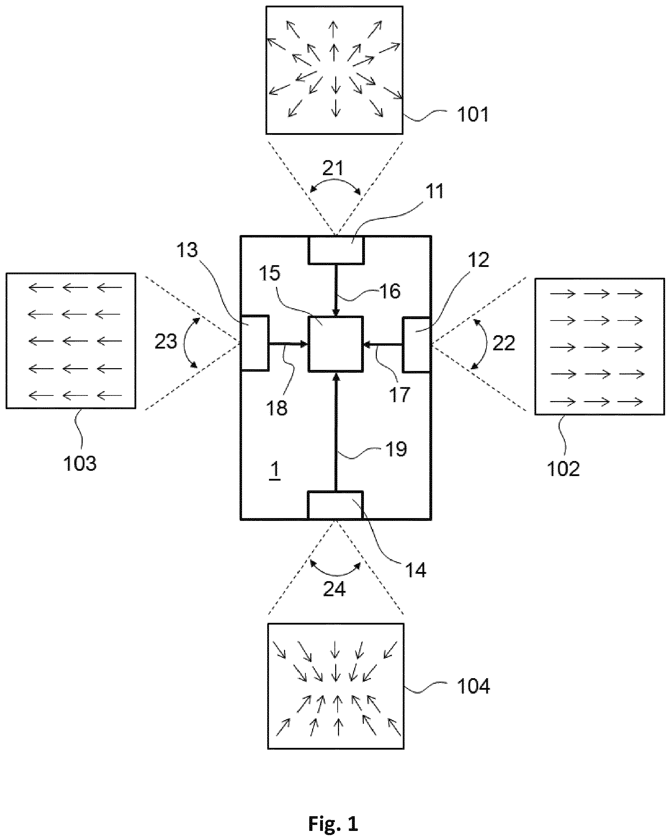

Figure 1 to 4 each show a vehicle 1 with a surround view system. The surround view system comprises a front view camera 11, a right side view camera 12, a left side view camera 13 and a rear view camera 14.

As illustrated in Fig. 1 to 4, the front camera 11 has its position in the front of the vehicle 1 while it is oriented, i.e. directed with its field of view 21, to the environment lying ahead of the vehicle 1. It shall be apparent to one skilled in the art, however, that the camera 11 can also be located in the front of the vehicle 1 while it is oriented into another direction, e.g. to the left or right side of the vehicle 1. The same applies analogously for the other cameras 12-14.

The rear camera 14 has its position in the rear of the vehicle 1 while it is oriented to the environment lying behind the vehicle, i.e. it has a rearward field of view 24.

The right side view camera 12 and the left side view camera 13 have their positions on the right and on the left side of the vehicle 1 while they are oriented to the environment on the right and respectively on the left side of the vehicle 1, i.e. they have a right side field of view 22 and a left side field of view 23.

The cameras 11-14 are connected to a central ECU 15 via cable connections 16-19. The cameras 11-14 are preferably connected to identical connection ports provided at the ECU 15. Thus, it has to be determined, which camera 11-14 has which position and/or orientation, i.e. which image signals come from which of the cameras 11-14.

According to the invention, this is done by means of image processing of the images captured by the cameras 11-14.

In case of a surround view camera system shown in Fig. 1 to 4, the cameras 11-14 have different specified orientations and mounting positions. Each orientation is associated with a specific mounting position, and vice versa. Thus, the position of each camera 11-14 is known, once it has been be determined which of the cameras 11-14 has which of the specified orientations, and vice versa.

The same applies for mirror replacement systems, which usually comprises two cameras having specified positions, whereby each position is associated with a specific orientation, and vice versa.

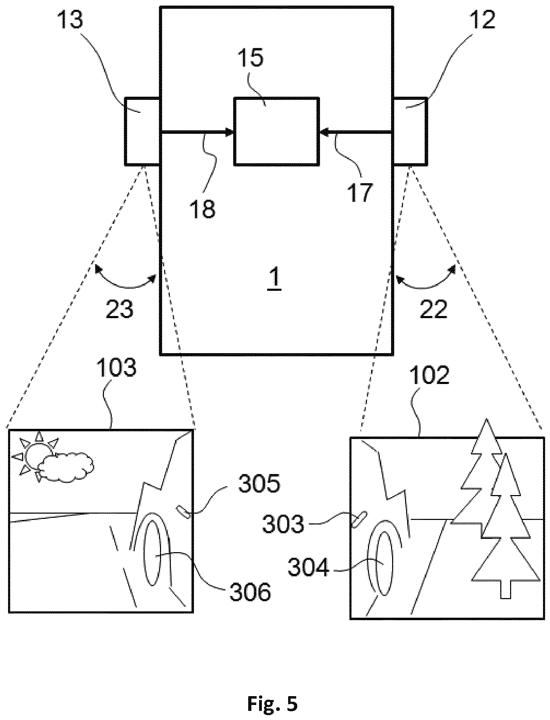

Figure 5 shows a vehicle 1 with such a mirror replacement system. As illustrated, the mirror replacement system comprises a right side camera 12 and a left side camera 13. The right side camera 12 has its position on the right side of the vehicle 1 while it is oriented, i.e. directed with its field of view 22, to the environment lying on the right side and behind the vehicle 1. It shall be apparent to one skilled in the art, however, that the camera 12 can also be located on the right side of the vehicle 1 while it is oriented into another direction. The same applies analogously for the second camera 13, which has its position on the left side of the vehicle 1 while it is oriented, i.e. directed with its field of view 23, to the environment lying on the left side and behind the vehicle 1.

The cameras 12 and 13 are connected to a central ECU 15 via cable connections 17 and 18. The cameras 12 and 13 are preferably connected to identical connection ports provided at the ECU 15. Thus, it has to be determined which camera 12 and 13 has which position and/or orientation, i.e. which image signals come from which of the cameras 12 and 13.

In case of a multiple-camera system, such as a surround view and mirror replacement system, the positions and/or orientations of the cameras 11-14 are usually defined in advance. The defined positions and/or orientations may be stored on the ECU 15 as well as the rules/principles how to determine which camera 11-14 has which position and/or orientation by means of image processing according to the invention, in particular according to one of the embodiments which are described in the following.

The embodiments, which are described in the following, are not limited to the respective camera systems of the respective figures. It shall be apparent to one skilled in the art, however, that the embodiments may be practised also with other multi-camera systems, i.e. camera systems with at least two cameras having a different defined position and/or different defined orientation. It shall also be apparent, that embodiments may be combined with each other where possible.

According to a first embodiment of the invention, which is illustrated in simplified form in Fig. 1, images are captured during a movement of the vehicle 1 and the mounting positions of the cameras 11-14 are determined by evaluating an optical flow within the captured images 101-104.

In Fig. 1, the optical flow in the images 101-104 is illustrated by arrows. The optical flow can be calculated by using features which are detected in an image frame of a sequence of images and then matched in a consecutive frame. This information is used to generate the optical flow field for the detected features in those two image frames, or consecutive images.

As illustrated in Fig. 1, when the vehicle is travelling in a forward direction, the different orientations of the cameras 11-14 result in distinctive and distinguishable optical flow fields in the camera images 101-104. The same applies for all other possible travelling directions of the vehicle. Accordingly, it can be determined, e.g. by individual evaluation and/or comparison of the optical flow fields, which camera 11-14 has which of the orientations (and accordingly which position) specified for the surround view system of Fig. 1.

Preferably, the aforementioned embodiment is carried out while the vehicle 1 is moving. For this, the ECU 15 can be connected to the vehicle bus, e.g. to the CAN bus of the vehicle 1, and provided with information about the movement state of the vehicle 1, e.g. travelling direction, steering angle, gear position (forward, rearward) and/or travelling speed.

Each movement state of the vehicle 1 results in a different characteristic optical flow field for each camera orientation. The optical flow fields for each camera orientation in dependence of the movement state of the vehicle 1 can be stored on the ECU 15. Thus, it can be determined by means of image processing and by knowing to current movement state of the vehicle, which camera 11-14 has which of the defined orientations and accordingly which of the defined positions.

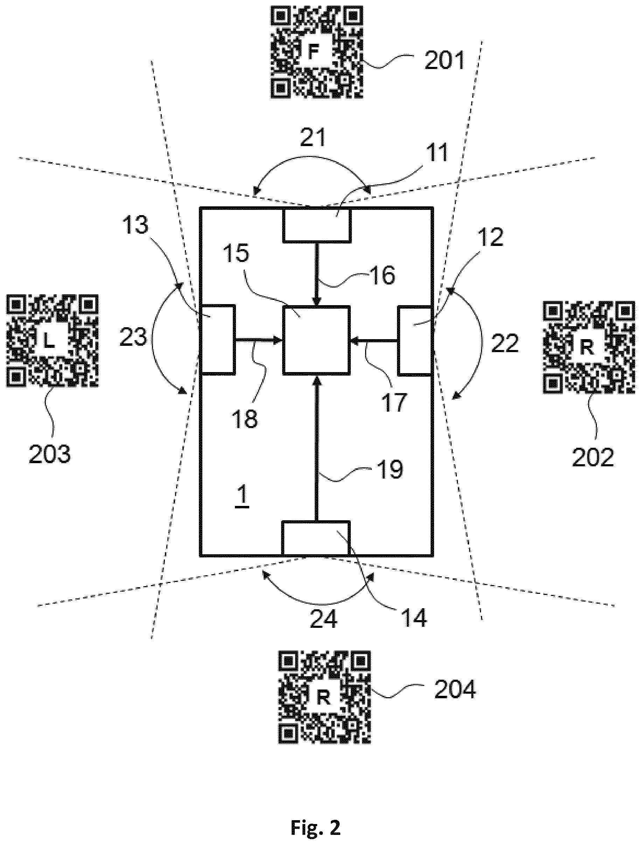

Fig. 2 illustrates in a simplified form a second embodiment of the invention. According to the second embodiment of the invention, the mounting positions and/or orientations are determined by detecting specific markers 201-204, which are specifically arranged for this purpose. In particular, for each mounting position and/or orientation a distinctive marker 201-204 is provided, e.g. on the ground around the vehicle 1 in the fields of view 21-24 of the cameras 11-14, such that each marker 201-204 is captured only by that camera 11-14, which has the respective position and/or orientation associated with the respective marker 201-204. As illustrated in Fig. 2, the markers 201-204 may be QR-Codes. Other kinds of markers 201-204 are also possible as long as the markers 201-204 are provided with an optically recognizable code which identifies the type of the marker and accordingly the position and/or orientation of the camera. Among others, the optical recognizable codes may differ in the colour of the markers or in the number or arrangement of the markers.

The markers 201-204 may not necessarily be arranged on the ground. They may also be attached temporarily or permanently to the vehicle 1, e.g. to parts of the vehicle 1 which are in the fields of view 21-24 of the cameras 11-14, such that each marker 201-204 is captured only by that camera 11-14, which has the associated position and/or orientation.

The markers 201-204 may also be hand-held marker 201-204, such that they can be held into the fields of view 21-24 of the cameras 11-14 by a person, e.g. on a demand of the system.

The characteristics of the markers 201-204 for each camera position and/or orientation can be stored on the ECU 15. Thus, the positions and/or orientations of the camersa 11-14 can be determined by detecting the markers 201-204 in the images of the cameras 11-14.

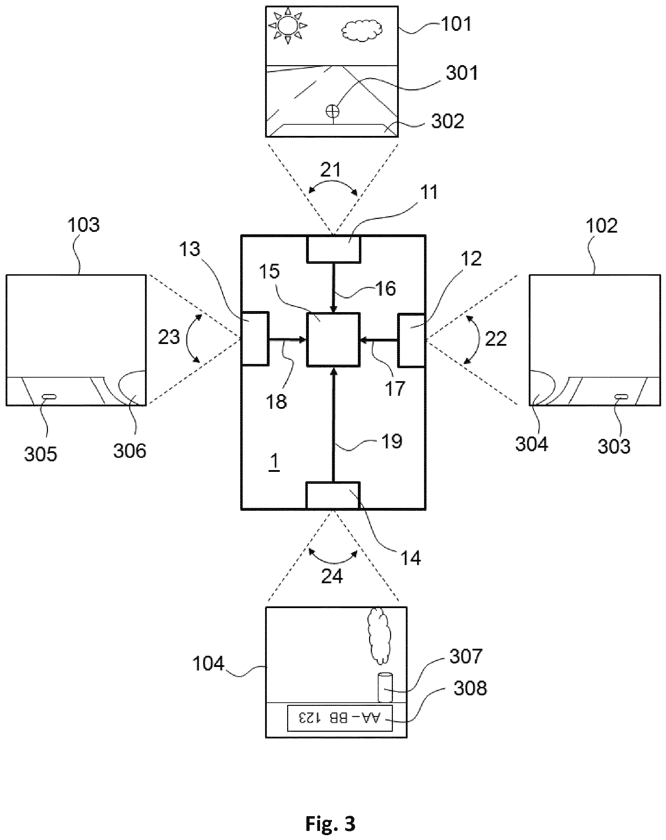

According to a third embodiment of the invention, which is illustrated in simplified form in Fig. 3, the mounting positions are determined by detecting reference features 301-308 of the vehicle 1, such as characteristic components 301, wheels 304 and 306, front hood 302, exhaust pipe 307, license plate 308, door handles 303 and 305, etc. In case of a surround view camera system, each camera 11-14 usually has a field of view 21-24 with an opening angle of more than 180 degree. Accordingly, each camera 11-14 image will contain parts of the vehicle chassis. As it can be seen in Fig. 3, each camera 11-14 will capture different specific parts 301-308 of the chassis (or same parts but in a different image region), such that it can be determined which camera 11-14 has which position and/or orientation by detecting these specific parts 301-308.

The specific reference features 301-308 for each camera position and/or orientation can be stored on the ECU 15. Thus, it can be determined by detecting the reference features 301-308 in the images of the cameras 11-14, which camera 11-14 has which position and orientation.

In case of a multiple-camera system, where the cameras 11-14 have overlapping fields of view 21-24, and where the position and/or orientation of at least one of the cameras 11-14 is known, it is possible to determine the positions and/or orientations of the other cameras 11-14 according to a fourth embodiment of the invention.

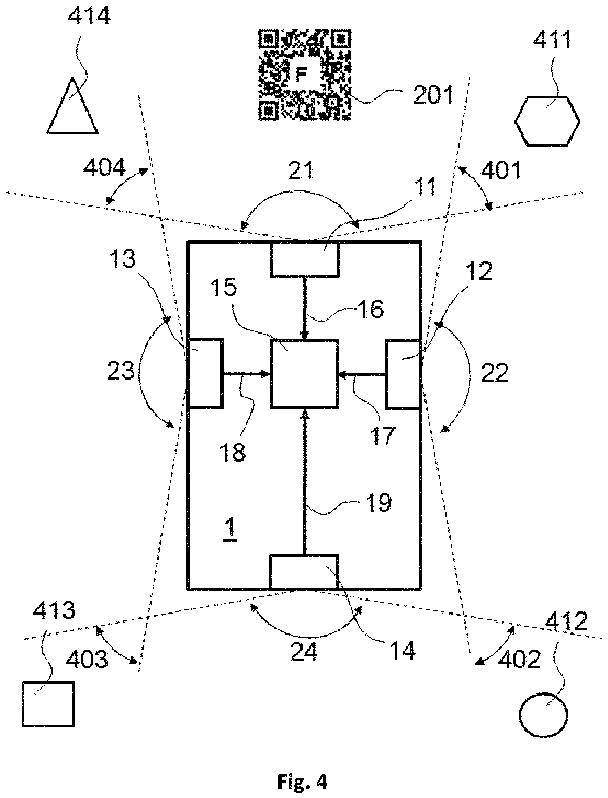

The fourth embodiment of the invention is illustrated in simplified form in Fig. 4. If the position and/or orientation of at least one camera 11-14 is known, e.g. by detecting a specific marker 201 with one camera 11, the mounting positions and/or orientations of the other cameras 12-14 can be determined by evaluating overlapping image regions 401-404 of the fields of view 21-24 of the cameras 11-14. Particularly, the positions and/or orientations of the other cameras 12-14 are determined by matching corresponding image regions 401-404, e.g. by detecting and matching objects 411-414 or feature points in the respective regions 401-404. It shall be apparent, that the fourth embodiment may be combined with each of the previously mentioned embodiments. One advantage of the fourth embodiment is that for example only one marker 201-204 (second embodiment) or the detection of only one reference feature 301-308 of the vehicle 1 (third embodiment) or the detection of only one distinctive optical flow field in the images 101-104 (first embodiment) is sufficient for determining the positions and/or orientations of all cameras 11-14.

Fig. 5 illustrates the third embodiment of the invention on the example of a mirror replacement system, whereby the positions of the cameras 12 and 13 are determined by detecting specific features 303-306 of the vehicle 1 in the camera images 102 and 103.

The method according to the present invention may be performed at any time when necessary, e.g. inside or outside the factory, at every system start or according to defined time intervals.

### Reference number list

- 1: vehicle
- 11: front camera
- 12: right camera
- 13: left camera
- 14: rear camera
- 15: ECU
- 16: cable connection
- 17: cable connection
- 18: cable connection
- 19: cable connection
- 21: field of view
- 22: field of view
- 23: field of view
- 24: field of view
- 101: camera image (upright)
- 102: camera image (upright)
- 103: camera image (upright)
- 104: camera image (upright)
- 201: marker
- 202: marker
- 203: marker
- 204: marker
- 301: characteristic component
- 302: hood
- 303: door handle
- 304: wheel
- 305: door handle
- 306: wheel
- 307: exhaust pipe
- 308: license plate
- 401: overlapping image region
- 402: overlapping image region
- 403: overlapping image region
- 404: overlapping image region
- 411: object
- 412: object
- 413: object
- 414: object

## Claims

1. Method for determining which one of a plurality of cameras (11-14) of a camera system of a vehicle (1) an image signal comes from, the cameras (11-14) being arranged on the vehicle (1) and having different mounting positions and/or orientations, the method comprising
- capturing images (101-104) by the plurality of cameras (11-14); and
- the mounting positions and/or orientations of the cameras (11-14) are determined by means of image processing of the captured images (101-104)
- determining which one of the plurality of cameras (11-14) a captured image comes from by (i) evaluating an optical flow within the captured images (101-104)wherein the captured images are taken during a movement of the vehicle and/or (ii) by evaluating overlapping regions (401-404) of the fields of view (21-24) of the cameras (11-14).

2. Method according to claim 1, wherein evaluating an optical flow within the captured images (101-104)comprises calculating the optical flow by using features detected in an image frame of a sequence of the captured images and then matched in a consecutive frame.

3. Camera system for a vehicle (1) comprising a plurality of cameras (11-14) having different mounting positions and/or orientations, and comprising image processing means adapted to determine which one of the plurality of cameras (11-14)an image signal comes from according to a method according to one of the preceding claims.

4. Camera system according to claim 3, wherein the camera system is a surround view system comprising four cameras (11-14) having four different specified mounting positions and/or orientations.

5. Camera system according to claim 3, wherein the camera system is a mirror replacement system comprising two cameras (12; 13) having two different specified mounting positions and/or orientations.

6. Image processing means for a multiple-camera system and for determining which one of a plurality of cameras (11-14) of the camera system an image signal comes from, whereby the image processing means comprise a computer program product with computer executable code stored thereon which, when executed by the image processing means, executes the method according to one of the claims 1 to 2.

7. Vehicle (1) comprising a camera system according to one of the claims 3 to 5.

## Patentansprüche

1. Verfahren zur Bestimmung, von welcher einen von einer Vielzahl von Kameras (11-14) eines Kamerasystems eines Fahrzeugs (1) ein Bildsignal kommt, wobei die Kameras (11-14) an dem Fahrzeug (1) angeordnet sind und unterschiedliche Montagepositionen und/oder Ausrichtungen aufweisen, wobei das Verfahren umfasst:
- Erfassen von Bildern (101-104) durch die Vielzahl von Kameras (11-14); und
- die Montagepositionen und/oder Ausrichtungen der Kameras (11-14) werden mittels Bildverarbeitung der erfassten Bilder (101-104) bestimmt;
- Bestimmen, von welcher einen von einer Vielzahl von Kameras (11-14) ein erfasstes Bild kommt, durch (i) Bewerten eines optischen Flusses innerhalb der erfassten Bilder (101-104), wobei die erfassten Bilder während einer Bewegung des Fahrzeugs aufgenommen werden, und/oder (ii) durch Bewerten überlappender Regionen (401-404) der Sichtfelder (21-24) der Kameras (11-14).

2. Verfahren nach Anspruch 1, wobei das Bewerten eines optischen Flusses innerhalb der erfassten Bilder (101-104) ein Berechnen des optischen Flusses unter Verwendung von Merkmalen umfasst, die in einem Bildrahmen einer Sequenz der erfassten Bilder erkannt wurden und dann in einem nachfolgenden Rahmen eingepasst wurden.

3. Kamerasystem für ein Fahrzeug (1), umfassend eine Vielzahl von Kameras (11-14) mit unterschiedlichen Montagepositionen und/oder Ausrichtungen, und umfassend Bildverarbeitungsmittel, die dazu ausgelegt sind, festzustellen, von welcher einen von der Vielzahl von Kameras (11-14) ein Bildsignal kommt, gemäß einem Verfahren nach einem der vorangehenden Ansprüche.

4. Kamerasystem nach Anspruch 3, wobei das Kamerasystem ein Surround-View-System ist, das vier Kameras (11-14) umfasst, die vier unterschiedliche spezifizierte Montagepositionen und/oder Ausrichtungen aufweisen.

5. Kamerasystem nach Anspruch 3, wobei das Kamerasystem ein Spiegelersatzsystem ist, das zwei Kameras (12; 13) umfasst, die zwei unterschiedliche spezifizierte Montagepositionen und/oder Ausrichtungen aufweisen.

6. Bildverarbeitungsmittel für ein Mehrkamerasystem und zum Feststellen, welcher einen von einer Vielzahl von Kameras (11-14) des Kamerasystems ein Bildsignal kommt, wobei das Bildverarbeitungsmittel ein Computerprogrammprodukt mit darauf gespeichertem computerausführbarem Code umfasst, der, wenn ausgeführt durch das Bildverarbeitungsmittel, das Verfahren nach einem der Ansprüche 1 bis 2 ausführt.

7. Fahrzeug (1), umfassend ein Kamerasystem nach einem der Ansprüche 3 bis 5.

## Revendications

1. Procédé destiné à déterminer la caméra d'une pluralité de caméras (11-14) d'un système de caméras d'un véhicule (1) de laquelle provient un signal d'image, les caméras (11-14) étant disposées sur le véhicule (1) et ayant différentes positions et/ou orientations de montage, le procédé comprenant
- la capture d'images (101-104) par la pluralité de caméras (11-14) ; et
- les positions et/ou orientations de montage des caméras (11-14) sont déterminées au moyen d'un traitement d'image des images capturées (101-104) ;
- la détermination de la caméra de la pluralité de caméras (11-14) de laquelle provient une image capturée (i) par évaluation d'un flux optique à l'intérieur des images capturées (101-104), les images capturées étant prises pendant un déplacement du véhicule, et/ou (ii) par évaluation de régions se chevauchant (401-404) des champs de vision (21-24) des caméras (11-14).

2. Procédé selon la revendication 1, dans lequel l'évaluation d'un flux optique à l'intérieur des images capturées (101-104) comprend le calcul du flux optique au moyen de caractéristiques détectées dans une trame d'image d'une séquence des images capturées puis mises en correspondance dans une trame consécutive.

3. Système de caméras pour un véhicule (1) comprenant une pluralité de caméras (11-14) ayant différentes positions et/ou orientations de montage, et comprenant des moyens de traitement d'image adaptés pour déterminer la caméra de la pluralité de caméras (11-14) de laquelle provient un signal d'image conformément à un procédé selon une des revendications précédentes.

4. Système de caméras selon la revendication 3, le système de caméras étant un système de vision périphérique comprenant quatre caméras (11-14) ayant quatre positions et/ou orientations de montage spécifiées différentes.

5. Système de caméras selon la revendication 3, le système de caméras étant un système de remplacement de miroirs comprenant deux caméras (12 ; 13) ayant deux positions et/ou orientations de montage spécifiées différentes.

6. Moyens de traitement d'image pour un système à multiples caméras et destinés à déterminer la caméra d'une pluralité de caméras (11-14) du système de caméras de laquelle provient un signal d'image, les moyens de traitement d'image comprenant un produit-programme informatique sur lequel est stocké un code exécutable par ordinateur qui, lorsqu'il est exécuté par les moyens de traitement d'image, exécute le procédé selon une des revendications 1 à 2.

7. Véhicule (1) comprenant un système de caméras selon une des revendications 3 à 5.
